(19) Europäisches Patentamt
European Patent Office
Office européen des brevets

(11) **EP 4 751 864 A1**

(12) **EUROPEAN PATENT APPLICATION**
published in accordance with Art. 153(4) EPC

(43) Date of publication:
**03.06.2026 Bulletin 2026/23**

(21) Application number: **24845206.2**

(22) Date of filing: **05.06.2024**

(51) International Patent Classification (IPC):
***B25J 17/00*** (2006.01)     ***B25J 9/06*** (2006.01)

(52) Cooperative Patent Classification (CPC):
**B25J 9/06; B25J 17/00**

(86) International application number:
**PCT/JP2024/020473**

(87) International publication number:
**WO 2025/022824 (30.01.2025 Gazette 2025/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.07.2023 JP 2023120061**

(71) Applicant: **TOYOTA JIDOSHA KABUSHIKI
KAISHA**
**Toyota-Shi,**
**Aichi-Ken 471-8571 (JP)**

(72) Inventor: **OKUMATSU, Yoshihiro**
**Toyota-shi, Aichi 471-8571 (JP)**

(74) Representative: **Cabinet Beau de Loménie**
**103, rue de Grenelle / CS 90800**
**75340 Paris Cedex 07 (FR)**

(54) **ROBOT CONTROL SYSTEM, METHOD FOR CONTROLLING SAME, AND PROGRAM**

(57)     The back drivability of an arm part of a robot is improved. A robot control system includes: an arm part or a leg part extending from a body part of a robot and including at least one joint part disposed at a position at least a first predetermined distance away from a root thereof; at least one drive unit configured to generate a driving force for rotationally driving the joint part; and at least one transmission part provided between a corresponding joint part and the drive unit and configured to transmit the driving force of the drive unit to the corresponding joint part. The at least one drive unit is correctively provided at the root of the arm part or the leg part.

Fig. 1

EP 4 751 864 A1

**Description**

**Technical Field**

The present disclosure relates to a robot control system for controlling a robot, its control method, and a program.

**Background Art**

A robot control system in which in each of joint parts of an arm part of a robot, a drive unit for driving that joint part is provided is known (see, for example, Patent Literature 1).

**Citation List**

**Patent Literature**

[Patent Literature 1] Japanese Unexamined Patent Application Publication No. H08-286759

**Summary of Invention**

**Technical Problem**

In the above-described robot control system, a drive unit is provided in each joint part of the arm part. Further, it is also conceivable that the arm part is operated, for example, after machine learning or the like is carried out therefor. Further, peripheral components such as wiring lines necessary for such a drive unit are also provided in the arm part. Therefore, it leads to an increase in the weight of the arm part of the robot and may lead to deterioration of the back drivability.

The present disclosure has been made to solve the above-described problem, and its main object is to provide a robot control system, its control method, and a program capable of improving the back drivability of an arm part of the robot.

**Solution to Problem**

An aspect of the present disclosure for achieving the above-described object is a robot control system including:

an arm part or a leg part extending from a body part of a robot and including at least one joint part disposed at a position at least a first predetermined distance away from a root thereof;
at least one drive unit configured to generate a driving force for rotationally driving the joint part; and
at least one transmission part provided between a corresponding joint part and the drive unit and configured to transmit the driving force of the drive unit to the corresponding joint part, in which
the at least one drive unit is collectively provided at the root of the arm part or the leg part.

In this embodiment, the robot control system may further include:

at least one rotation detection unit configured to detect rotation information of the drive unit;
a first control unit configured to calculate an attitude value of the robot based on the rotation information of the drive unit detected by the rotation detection unit; and
at least one second control unit configured to provide a driving instruction to a corresponding drive unit based on the attitude value of the robot calculated by the first control unit, in which
the drive unit, the rotation detection unit, and the first and second control units may be collectively provided at the root of the arm part or the leg part.

In this embodiment,

the second control unit may output a current value to the first control unit according to a torque exerted on the corresponding drive unit,
the first control unit may calculate the attitude value of the robot based on the current value received from the second control unit and the rotation information of the drive unit received from the rotation detection unit, and
the second control unit may provide the driving instruction to the corresponding drive unit based on the attitude value of the robot calculated by the first control unit.

In this embodiment,
the first control unit may:

calculate an acceleration based on the rotational position information of the drive unit detected by the rotation detection unit,
calculate the attitude value of the robot based on the rotational position information of each drive unit received from the rotation detection unit, and calculate an inertia value of the robot based on the calculated attitude value,
calculate an inertia compensation value for the drive unit based on the calculated acceleration and the inertia value,
output the calculated attitude value and the inertia compensation value to a corresponding second control unit, and
the second control unit may provide the driving instruction to the corresponding drive unit based on the attitude value and the inertia compensation value received from the first control unit.

In this embodiment, the robot control system may further include:

a third control unit provided at a position at least a second predetermined distance away from the root of the arm part or the leg part, and
the second control unit may provide the driving instruction to a corresponding drive unit according to a command received from either the first or third control unit.

In this embodiment,
the second control unit may:

provide, when a collision of an object against the robot is detected, the driving instruction to the corresponding drive unit according to a command received from the first control unit, and
provide, when no collision of an object against the robot is detected, the driving instruction to the corresponding drive unit according to a command received from the third control unit.

An aspect of the present disclosure for achieving the above-described object is a method for controlling a robot control system,
the robot control system including:

an arm part or a leg part extending from a body part of a robot and including at least one joint part disposed at a position at least a predetermined distance away from a root thereof;
at least one drive unit configured to generate a driving force for rotationally driving the joint part;
at least one transmission part provided between a corresponding joint part and the drive unit and configured to transmit the driving force of the drive unit to the corresponding joint part;
at least one rotation detection unit configured to detect rotation information of the drive unit; a first control unit; and at least one second control unit, in which the drive unit, the rotation detection unit, the first control unit, and the at least one second control unit are collectively provided at the root of the arm part or the leg part, and
the method including:

a step of, by the first control unit, calculating an attitude value of the robot based on rotation information of the drive unit received from the rotation detection unit;
a step of, by the second control unit, providing a driving instruction to a corresponding drive unit based on the attitude value of the robot calculated by the first control unit.

An aspect of the present disclosure for achieving the above-described object is a program for a robot control system,
the robot control system including:

an arm part or a leg part extending from a body part of a robot and including at least one joint part disposed at a position at least a predetermined distance away from a root thereof;
at least one drive unit configured to generate a driving force for rotationally driving the joint part;
at least one transmission part provided between a corresponding joint part and the drive unit and configured to transmit the driving force of the drive unit to the corresponding joint part;
at least one rotation detection unit configured to detect rotation information of the drive unit; a first control unit; and at least one second control unit, in which the drive unit, the rotation detection unit, the first control unit, and the at least one second control unit are collectively provided at the root of the arm part or the leg part, and

the program being configured to cause a computer to execute:

a process for, by the first control unit, calculating an attitude value of the robot based on rotation information of the drive unit received from the rotation detection unit;

a process for, by the second control unit, providing a driving instruction to a corresponding drive unit based on the attitude value of the robot calculated by the first control unit.

**Advantageous Effects of Invention**

According to the present disclosure, it is possible to provide a robot control system, its control method, and a program capable of improving the back drivability of an arm part of the robot.

**Brief Description of Drawings**

Fig. 1 is a perspective view showing a schematic configuration of an arm part of a robot according to an embodiment;
Fig. 2 is a block diagram showing a schematic system configuration of a robot control system according to an embodiment;
Fig. 3 is a flowchart showing a flow of a method for controlling a robot control system according to an embodiment;
Fig. 4 is a block diagram showing a schematic system configuration of a robot control system according to an embodiment; and
Fig. 5 is a flowchart showing a flow of a method for controlling a robot control system according to an embodiment.

**Description of Embodiments**

First Embodiment

Embodiments according to the present disclosure will be described hereinafter with reference to the drawings. Note that examples in which the present disclosure is applied to an arm part of a robot will be described hereinafter. However, the present disclosure can be applied to a leg part of a robot in a manner similar to that for the arm part, and its description will be omitted.

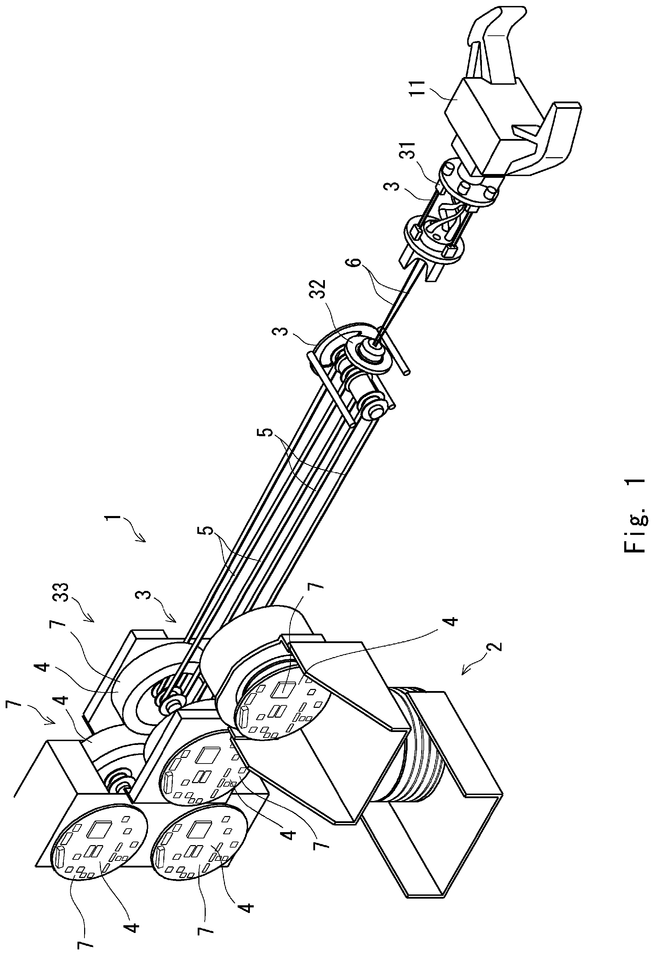

Fig. 1 is a perspective view showing a schematic configuration of an arm part of a robot according to this embodiment. The arm part 1 according to this embodiment extends from a body part of a robot (hereinafter referred to as a robot body part) 2. The robot body part 2 is configured as a base of the robot, but is not limited to this example, and may be configured, for example, as a torso of a humanoid robot. The arm part 1 is configured as an arm robot including one or a plurality of joint parts 3 at a position(s) at least a first predetermined distance away from the root thereof through a link(s) or the like.

Each joint part 3 may be configured to rotate around at least one of a yaw axis, a pitch axis, and a roll axis which are orthogonal to each other. For example, as shown in Fig. 1, the arm part 1 has a wrist joint 31, an elbow joint 32, and a shoulder joint 33.

The shoulder joint 33 is provided at the root of the arm part 1, and the wrist joint 31 and the elbow joint 32 are provided at positions at least a predetermined distance away from the root of the arm part 1. Each of the wrist joint 31, the elbow joint 32, and the shoulder joint 33 is configured to rotate around two axes, but it is not limited to this example. For example, each of them may be configured to rotate around only one axis, or three or more axes.

An end effector 11 capable of grasping an object is provided at the distal end of the arm part 1. A plurality of actuators 4 for generating driving forces for driving the respective joint parts 3 are collectively provided at the root of the arm part 1.

The actuators 4 are a specific example of the drive unit. The actuators 4 are configured, for example, as servomotors. Each actuator 4 generates a driving force for rotationally driving the rotation shaft of the corresponding joint part 3. In the example shown in Fig. 1, eight actuators 4 for generating driving forces for rotating two shafts of the wrist joint 31, the elbow joint 32, and the shoulder joint 33, respectively, are collectively provided at the root of the arm part 1.

For example, as shown in Fig. 1, belts 5 are strung between the respective rotational shafts of the elbow joint 32 and the driving shafts of the corresponding actuators 4. The belts 5 are a specific example of the transmission part. The driving shaft of each actuator 4 transmits a driving force to the respective rotational shaft of the elbow joint 32 through the belt 5.

Similarly, belts 5 are strung between the respective rotational shafts of the shoulder joint 33 and the driving shafts of the corresponding actuators 4. The driving shaft of each actuator 4 transmits a driving force to the respective rotational shaft of the shoulder joint 33 through the belt 5. Wires 6 are strung between the respective rotational shafts of the wrist joint 31 and the driving shafts of the corresponding actuators 4. The driving shaft of each actuator 4 transmits a driving force to the respective rotational shaft of the wrist joint 31 through the wire 6.

Note that although the belts 5 and the wires 6 are used as the transmission part in the above-described example, it is not limited to this example. The transmission part may be, for example, chains, gears, or shafts, i.e., may be any transmission members capable of transmitting the driving forces of the actuators 4.

Encoders 7 are a specific example of the rotation detection unit. The encoders 7 are integrally provided in the actuators 4. The encoders 7 detect the rotational positions of the driving shafts of the actuators 4. Note that the rotation detection unit is not limited to the encoders 7, and may be any of other types of angle sensors.

It should be noted in a conventional robot control system, an actuator is provided in each joint part of an arm part. Further, peripheral components such as wiring lines necessary for the actuators are also provided in the arm part. Therefore, it leads to an increase in the weight of the arm part and may lead to deterioration of the back drivability.

In contrast to this, in the robot control system 10 according to this embodiment, as described above, the actuators 4 are collectively provided at the root of the arm part 1. As a result, there is no need to provide actuators and their peripheral components at the distal end, intermediate parts, and the like of the arm part 1. Therefore, the weight of the arm part 1 can be greatly reduced, and the back drivability of the arm part 1 can be improved.

Note that the improvement in the back drivability means, for example, reducing $T_f$ by virtually reducing one or more of $T_s$, $I_a$, $C_a$, and $K_a$ in the below-shown Expression (1) in a physical manner or by performing control.
[Expression 1]

$$T_f = T_s + I_a\ddot{\theta} + C_a\dot{\theta} + K_a\theta \quad \cdots(1)$$

In the above-shown Expression (1), Ts is a static friction force; $\theta$ is an output shaft angle of the actuator; Ka is a stiffness coefficient; and Ca is a viscosity coefficient. Ia is an inertia coefficient, which is, for example, a nominal value of the moment of inertia of the motor.

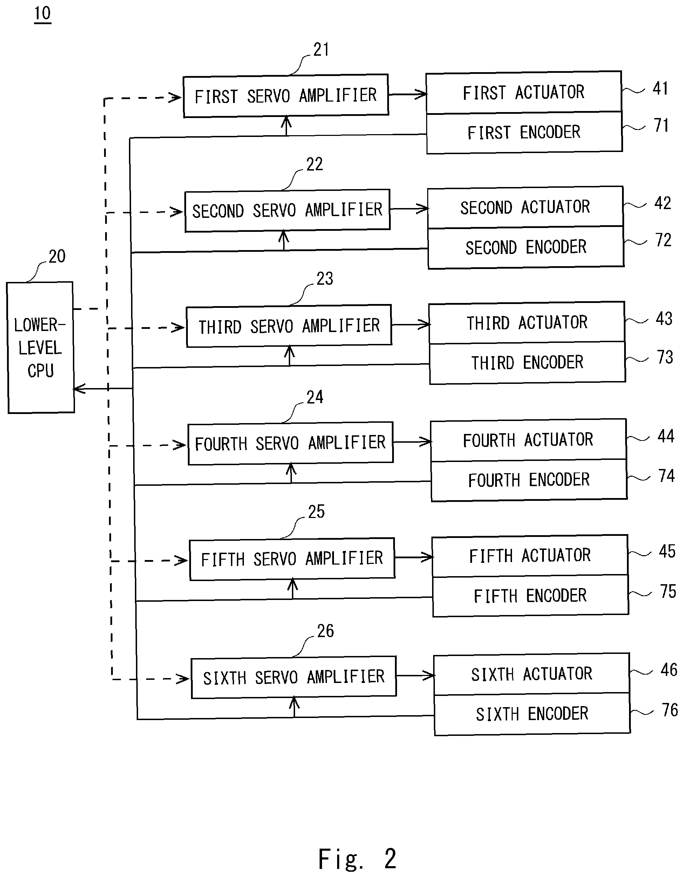

Fig. 2 is a block diagram showing a schematic system configuration of the robot control system according to this embodiment. As shown in Fig. 2, the robot control system according to this embodiment includes first to sixth actuators 41 to 46, first to sixth encoders 71 to 76, a lower-level CPU 20, and first to sixth servo amplifiers 21 to 26. Note that an example configured by six actuators, six encoders, and six servo amplifiers will be described hereinafter, but it is not limited to this example. That is, the numbers of actuators, encoders, and servo amplifiers may be arbitrarily determined.

The first actuator 41 generates a driving force of a first rotation shaft of the wrist joint 31. The second actuator 42 generates a driving force of a second rotation shaft of the wrist joint 31. The third actuator 43 generates a driving force of a first rotation shaft of the elbow joint 32. The fourth actuator 44 generates a driving force of a second rotation shaft of the elbow joint 32. The fifth actuator 45 generates a driving force of a first rotation shaft of the shoulder joint 33. The sixth actuator 46 generates a driving force of a second rotation shaft of the shoulder joint 33.

The first encoder 71 detects the rotational position of the driving shaft of the first actuator 41. The first encoder 71 outputs the detected rotational position of the driving shaft of the first actuator 41 to the lower-level CPU 20 and the first servo amplifier 21.

The second encoder 72 detects the rotational position of the driving shaft of the second actuator 42. The second encoder 72 outputs the detected rotational position of the driving shaft of the second actuator 42 to the lower-level CPU 20 and the second servo amplifier 22.

The third encoder 73 detects the rotational position of the driving shaft of the third actuator 43. The third encoder 73 outputs the detected rotational position of the driving shaft of the third actuator 43 to the lower-level CPU 20 and the third servo amplifier 23.

The fourth encoder 74 detects the rotational position of the driving shaft of the fourth actuator 44. The fourth encoder 74 outputs the detected rotational position of the driving shaft of the fourth actuator 44 to the lower-level CPU 20 and the fourth servo amplifier 24.

The fifth encoder 75 detects the rotational position of the driving shaft of the fifth actuator 45. The fifth encoder 75 outputs the detected rotational position of the driving shaft of the fifth actuator 45 to the lower-level CPU 20 and the fifth servo amplifier 25.

The sixth encoder 76 detects the rotational position of the driving shaft of the sixth actuator 46. The sixth encoder 76 outputs the detected rotational position of the driving shaft of the sixth actuator 46 to the lower-level CPU 20 and the sixth servo amplifier 26.

The lower-level CPU (Central Processing Unit) 20 is a specific example of the first control unit. The lower-level CPU 20 performs high-speed calculation by using, for example, an FPGA (Field-Programmable Gate Array). Note that the first control unit may be formed by, for example, a processor that performs processing at a higher speed than that of the CPU, such as a GPU (Graphics Processing Unit), in place of the CPU.

The lower-level CPU 20 calculates attitude values of the arm part 1 of the robot based on the rotational positions (rotational angles) of the first to sixth actuators 41 to 46 received from the first to sixth encoders 71 to 76. More specifically, the lower-level CPU 20 performs kinematic calculation based on the rotational positions of the first to sixth actuators 41 to 46 received from the first to sixth encoders 71 to 76, and calculates the coordinate values of the respective links of the arm part 1 as attitude values.

The lower-level CPU 20 outputs the calculated attitude values of the arm part 1 of the robot to the first to sixth servo amplifiers 21 to 26. The lower-level CPU 20 transmits the above-described attitude values of the arm part 1 of the robot to the first to sixth servo amplifiers 21 to 26 through high-speed serial communication such as SCI (Serial Communication Interface) or SSI (Serial Synchronous Interface).

In this way, the first to sixth servo amplifiers 21 to 26 can acquire the attitude values of the arm part 1 of the robot at a high speed with a delay equivalent to one sampling of the control cycle (several tens microseconds) at maximum, and can provide driving instructions to the first to sixth actuators 41 to 46 at a high speed as described later.

The first to sixth servo amplifiers 21 to 26 are a specific example of the second control unit. The first to sixth servo amplifiers 21 to 26 are integrally provided with the first to sixth actuators 41 to 46, respectively, as shown in Fig. 1. The first to sixth servo amplifiers 21 to 26 provide driving instructions to the corresponding first to sixth actuators 41 to 46, respectively, based on the attitude values of the arm part 1 of the robot output from the lower-level CPU 20.

The first to sixth actuators 41 to 46 rotate the first and second rotational axes of the wrist joint 31, the first and second rotational axes of the elbow joint 32, and the first and second rotational axes of the shoulder joint 33, respectively, in response to the driving instructions received from the first to sixth servo amplifiers 21 to 26.

As described above, in the robot control system 10 according to this embodiment, the first to sixth actuators 41 to 46, the first to sixth encoders 71 to 76, the lower-level CPU 20, and the first to sixth servo amplifiers 21 to 26 are collectively provided at the root of the arm part 1.

In this way, it is possible to, in addition to improving the back drivability of the arm part 1 as described above, reduce the distances between the first to sixth actuators 41 to 46, the first to sixth encoders 71 to 76, the lower-level CPU 20, and the first to sixth servo amplifiers 21 to 26, to make it possible to perform high-speed data communication and high-speed computation, and thereby to increase the response speed of the robot. Further, it is also possible to prevent noises from being mixed with data during the above-described high-speed data communication.

Note that only the lower-level CPU 20 may be disposed at a position slightly away from the root of the arm part 1. However, the lower-level CPU 20 is more preferably provided collectively with the other components at the root of the arm part 1 in order to prevent noises from being mixed with data during the above-described high-speed data communication.

The arm part 1 of the robot according to this embodiment can perform, for example, a high-speed reflective movement similar to that performed by a human being by improving the back drivability of the arm part 1 as described above and increasing the response speed as described above.

More specifically, an operation process for, when a collision of an object against the arm part 1 of the robot is detected, avoiding the collision is set in advance by a program or the like in the first to sixth servo amplifiers 21 to 26. The first to sixth servo amplifiers 21 to 26 may detect a collision of an object against the robot based on, for example, a difference from a command value, torque values of the first to sixth actuators 41 to 46, a sensor value of a contact sensor, or the like.

Firstly, the lower-level CPU 20 calculates attitude values of the robot based on the rotational positions of the first to sixth actuators 41 to 46 received from the first to sixth encoders 71 to 76. The first to sixth servo amplifiers 21 to 26 provide driving instructions to the first to sixth actuators 41 to 46, respectively, based on the attitude values of the arm part 1 of the robot (the attitude of the whole robot) calculated by the lower-level CPU 20.

In this process, the first to sixth servo amplifiers 21 to 26 determine the amounts of operations and the directions of the operations of the first to sixth actuators 41 to 46, respectively, and the amount of adjustment of the impedance of the tip of the hand of the arm part 1 according to the program set in advance, and provide the above-described driving instructions.

In this manner, the first to sixth servo amplifiers 21 to 26 calculate the impedance of the whole robot based on the attitude of the whole robot and perform impedance control for adjusting the impedance thereof. By performing such impedance control, the robot can perform, for example, a high-speed reflective movement similar to that performed by a human being, such as a movement for catching a basketball.

Note that an upper-level CPU 27 (which will be described later) may calculate an impedance target value based on the velocity of the ball and the mass thereof at a slow cycle.

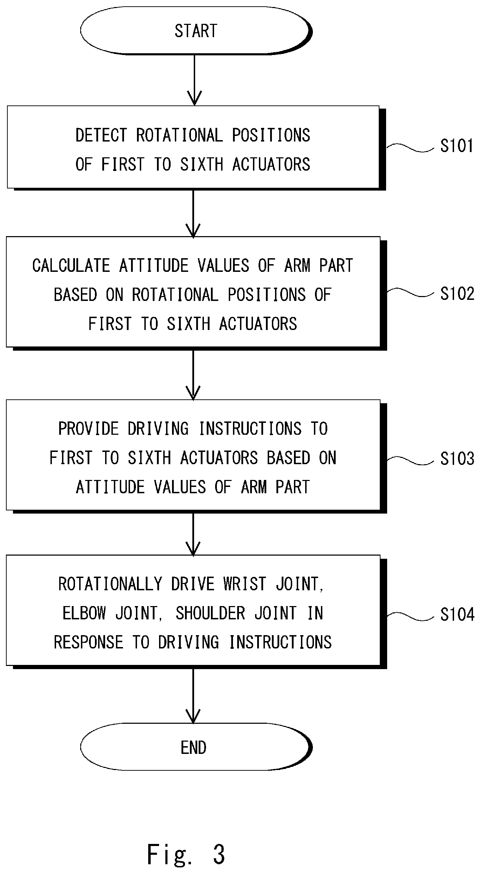

Next, a method for controlling a robot control system according to this embodiment will be described. Fig. 3 is a flowchart showing a flow of a method for controlling a robot control system according to this embodiment.

The first to sixth encoders 71 to 76 detect the rotational positions of the driving shafts of the first to sixth actuators 41 to 46, respectively, and output the detected rotational positions to the lower-level CPU 20 and the first to sixth servo amplifiers 21 to 26 (Step S101).

The lower-level CPU 20 calculates attitude values of the arm part 1 of the robot based on the rotational positions of the first to sixth actuators 41 to 46 received from the first to sixth encoders 71 to 76, and outputs the calculated attitude values to the first to sixth servo amplifiers 21 to 26 (Step S102).

The first to sixth servo amplifiers 21 to 26 provide driving instructions to the first to sixth actuators 41 to 46, respectively, based on the attitude values of the arm part 1 of the robot received from the lower-level CPU 20 (Step S103).

The first to sixth actuators 41 to 46 rotate the first and second rotational shafts of the wrist joint 31, the first and second rotational shafts of the elbow joint 32, and the first and second rotational shafts of the shoulder joint 33 in response to the driving instructions received from the first to sixth servo amplifiers 21 to 26 (Step S104).

Second Embodiment

In this embodiment, the attitude values of the arm part 1 of the robot are calculated while taking not only the rotational positions of the first to sixth actuators 41 to 46 but also the torques exerted on the first to sixth actuators 41 to 46 into consideration, and the driving instructions are provided to the first to sixth actuators 41 to 46 based on the calculated attitude values.

The first to sixth encoders 71 to 76 detect the rotational positions of the driving shafts of the first to sixth actuators 41 to 46, respectively. The first to sixth encoders 71 to 76 output the detected rotational positions of the driving shafts of the first to sixth actuators 41 to 46 to the lower-level CPU 20 and the first to sixth servo amplifiers 21 to 26, respectively.

In this embodiment, the first to sixth servo amplifiers 21 to 26 also output current values (analog signals) to the lower-level CPU 20 according to the torques exerted on the corresponding first to sixth actuators 41 to 46.

The lower-level CPU 20 calculates the attitude values of the arm part 1 of the robot based on the rotational positions of the first to sixth actuators 41 to 46 received from the first to sixth encoders 71 to 76 and the above-described current values corresponding to the torques. The first to sixth servo amplifiers 21 to 26 provide driving instructions to the corresponding first to sixth actuators 41 to 46, respectively, based on the attitude values of the arm part 1 of the robot output from the lower-level CPU 20.

The first to sixth actuators 41 to 46 rotate the first and second rotational axes of the wrist joint 31, the first and second rotational axes of the elbow joint 32, and the first and second rotational axes of the shoulder joint 33, respectively, in response to the driving instructions received from the first to sixth servo amplifiers 21 to 26.

In this way, the first to sixth servo amplifiers 21 to 26 can provide driving instructions to the first to sixth actuators 41 to 46 while taking not only the rotational positions of the first to sixth actuators 41 to 46 but also the torques exerted on the first to sixth actuators 41 to 46 into consideration. For example, when the robot collides with an object, each of the first to sixth servo amplifiers 21 to 26 can not only determine that the robot should run away in the direction opposite to the collision direction, but also determine a runaway vector. Therefore, the robot can perform a reflexive evasive movement in a manner similar to that performed by a human being.

Third Embodiment

In this embodiment, not only the attitude values of the arm part 1 of the robot but also inertia compensation values of the first to sixth actuators 41 to 46 are calculated, and the driving instructions are provided to the first to sixth actuators 41 to 46 based thereon.

The first to sixth encoders 71 to 76 detect the rotational positions of the driving shafts of the first to sixth actuators 41 to 46, respectively. The first to sixth encoders 71 to 76 output the detected rotational positions of the driving shafts of the first to sixth actuators 41 to 46 to the lower-level CPU 20 and the first to sixth servo amplifiers 21 to 26, respectively.

In the third embodiment, the lower-level CPU 20 also calculates the acceleration of the arm part 1 of the robot based on the rotational positions of the first to sixth actuators 41 to 46 received from the first to sixth encoders 71 to 76. Further, the lower-level CPU 20 also calculates the attitude values of the arm part 1 of the robot based on the rotational positions of the first to sixth actuators 41 to 46 received from the first to sixth encoders 71 to 76. Further, the lower-level CPU 20 also calculates the inertia value of the arm part 1 of the robot based on the calculated attitude values of the arm part 1 of the robot.

The lower-level CPU 20 calculates inertia compensation values of the first to sixth actuators 41 to 46 based on the calculated acceleration and the inertia value of the arm part 1 of the robot. The lower-level CPU 20 outputs the calculated attitude values and the inertia compensation values of the arm part 1 of the robot to the corresponding first to sixth servo amplifiers 21 to 26, respectively. Note that the first to sixth servo amplifiers 21 to 26 may calculate the inertia compensation values of the first to sixth actuators 41 to 46, respectively, based on the acceleration and the inertia value of the arm part 1 of the robot.

The first to sixth servo amplifiers 21 to 26 provide driving instructions to the corresponding first to sixth actuators 41 to 46, respectively, based on the attitude values and the inertia compensation values of the arm part 1 of the robot output from the lower-level CPU 20.

The first to sixth actuators 41 to 46 rotate the first and second rotational axes of the wrist joint 31, the first and second rotational axes of the elbow joint 32, and the first and second rotational axes of the shoulder joint 33, respectively, in response to the driving instructions received from the first to sixth servo amplifiers 21 to 26.

According to the third embodiment, the driving instructions can be provided to the first to sixth actuators 41 to 46 while taking not only the overall attitude of the robot but also the inertia compensation values of the first to sixth actuators 41 to 46 into consideration, thus making it possible to enable more accurate control to be performed.

Fourth Embodiment

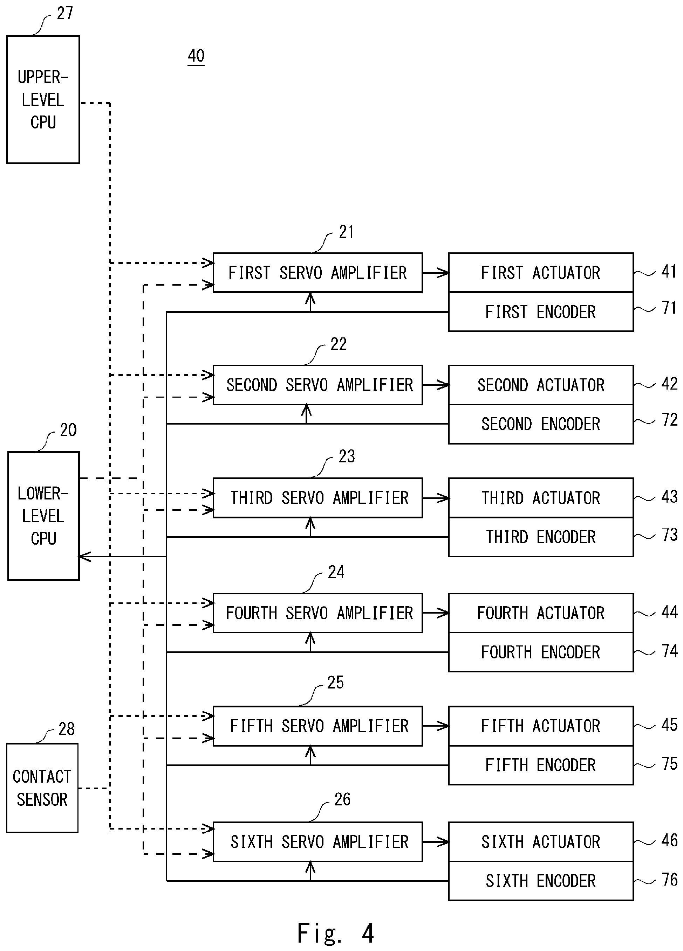

Fig. 4 is a block diagram showing a schematic system configuration of a robot control system according to this embodiment. The robot control system 40 according to this embodiment also includes an upper-level CPU 27 for controlling the normal operation of the robot.

The upper-level CPU 27 is a specific example of the third control unit. The upper-level CPU 27 is provided at a position at least a second predetermined distance away from the root of the arm part 1 (e.g., at the center of the torso of the robot or in the head of the robot). The upper-level CPU 27 is controlled by, for example, a ROS (Robot Operating System). Note that the upper-level CPU 27 may be formed by, for example, a processor that performs processing at a higher speed than that of the CPU, such as a GPU, in place of the CPU. The upper-level CPU 27 is connected to the first to sixth servo amplifiers 21 to 26.

The first to sixth servo amplifiers 21 to 26 transmit the rotational positions of the driving shafts of the first to sixth actuators 41 to 46 received from the first to sixth encoders 71 to 76 to the upper-level CPU 27. The upper-level CPU 27 calculates how each of the first to sixth actuators 41 to 46 should rotate, and provides a command therefor to a respective one of the first to sixth servo amplifiers 21 to 26.

As described above, commands are input to the first to sixth servo amplifiers 21 to 26 from both the upper-level CPU 27 and the lower-level CPU 20. Therefore, the first to sixth servo amplifiers 21 to 26 provide driving instructions to the corresponding first to sixth actuators 41 to 46, respectively, according to commands received from either the upper-level CPU 27 or the lower-level CPU 20.

Note that the upper-level CPU 27 and the first to sixth servo amplifiers 21 to 26 perform data communication such as serial communication, CAN (Controller Area Network) communication, or EtherCAT (Ethernet for Control Automation Technology) communication therebetween. In general, this data communication is performed in the order of several milliseconds. Therefore, the responsivity of the robot is limited, so that it is difficult to perform, for example, a high-speed reflective movement similar to that performed by a human being.

Meanwhile, as described above, high-speed data communication and high-speed arithmetic processing can be performed between the first to sixth actuators 41 to 46, the first to sixth encoders 71 to 76, the lower-level CPU 20, and the first to sixth servo amplifiers 21 to 26, and the response speed of the robot is increased. In this way, a high-speed reflective movement similar to that performed by a human being can be performed.

From the above-described facts, it is preferred that the lower-level CPU 20 performs a high-speed reflective movement of the robot, and the upper-level CPU 27 performs other normal operations of the robot.

For example, when the first to sixth servo amplifiers 21 to 26 detect a collision of an object against the robot based on a sensor value of a contact sensor 28 or the like, they provide driving instructions to the first to sixth actuators 41 to 46 so as to avoid the object by performing a high-speed reflective movement in response to a command received from the lower-level CPU 20. In this way, by making the robot perform a high-speed reflective movement similar to that performed by a human being, the collision with the object can be mitigated.

Meanwhile, when the first to sixth servo amplifiers 21 to 26 detect no collision of an object against the robot based on a sensor value of the contact sensor 28 or the like, they provide driving instructions to the first to sixth actuators 41 to 46 in response to a command received from the upper-level CPU 27.

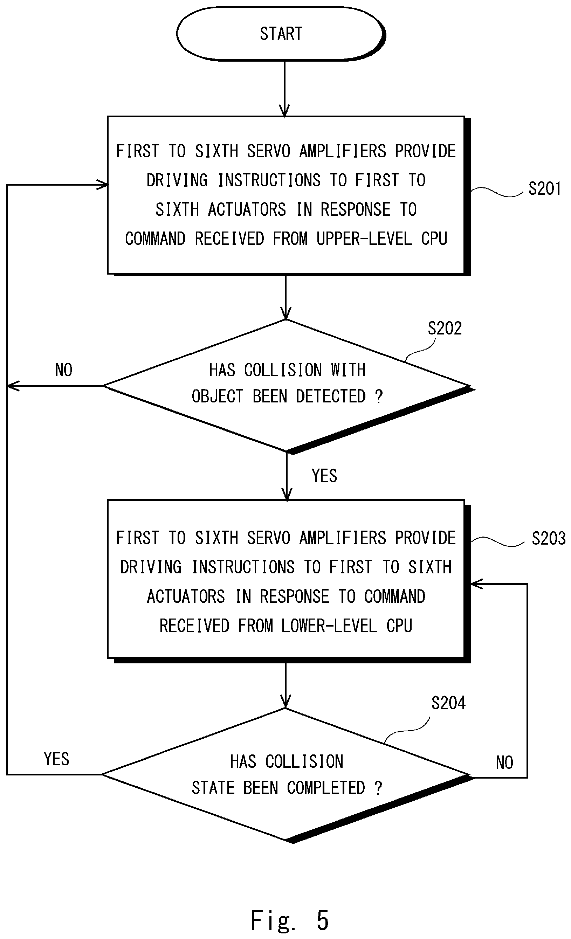

Fig. 5 is a flowchart showing the method for controlling the robot control system according to this embodiment described above.

Under normal circumstances, the first to sixth servo amplifiers 21 to 26 provide driving instructions to the first to sixth actuators 41 to 46 in response to a command received from the upper-level CPU 27 (Step S201).

Then, when the first to sixth servo amplifiers 21 to 26 detect a collision with an object by the contact sensor 28 or the like (Yes in Step S202), they provide driving instructions to the first to sixth actuators 41 to 46 in response to a command received from the lower-level CPU 20 (Step S203).

In this way, by making the robot perform a high-speed reflective movement similar to that performed by a human being, the collision with the object can be mitigated. In this process, the priority order of the whole robot control system is controlled so that no problem occurs even when the first to sixth servo amplifiers 21 to 26 do not follow the command received from the upper-level CPU 27.

When the first to sixth servo amplifiers 21 to 26 determine that the collision between the robot and the object has been avoided or that the collision state has been completed based on the sensor value of the contact sensor 28 (Yes in Step S204), they immediately return to the processing (Step S201) described above.

Although several embodiments according to the present disclosure have been described, these embodiments are shown merely as examples and are not intended to limit the scope of the disclosure. These new embodiments can be implemented in a variety of other forms, and various omissions, replacements, and modifications can be made to the extent that they do not deviate from the scope and spirit of the disclosure. These embodiments and modified examples thereof are included in the scope and spirit of the disclosure and are included in the scope equivalent to the scope of the disclosure specified in the patent claims.

The present disclosure can also be implemented, for example, by having a processor execute a computer program for the processes shown in Fig. 3 or 5.

The program can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g., magneto-optical disks), CD-ROM (Read Only Memory), CD-R, CD-R/W, and semiconductor memories (such as mask ROM, PROM (Programmable ROM), EPROM (Erasable PROM), flash ROM, and RAM (Random Access Memory)).

The program may be provided to a computer using any type of transitory computer readable media. Examples of transitory computer readable media include electric signals, optical signals, and electromagnetic waves. Transitory computer readable media can provide the program to a computer through a wired communication line (e.g., electric wires, and optical fibers) or a wireless communication line.

Each of the components constituting the robot control system 10 or 40 according to any of the above-described embodiments is, in addition to being able to be implemented by the program, able to be partially or entirely implemented by dedicated hardware such as an ASIC (Application Specific Integrated Circuit) or an FPGA.

This application is based upon and claims the benefit of priority from Japanese patent application No. 2023-120061, filed on July 24, 2023, the disclosure of which is incorporated herein in its entirety by reference.

**Reference Signs List**

1 Arm Part, 2 Body Part, 3 Joint Part, 4 Actuator, 5 Belt, 6 Wire, 7 Encoder, 10 Robot Control System, 11 End Effector, 20 Lower-level CPU, 21-26 First to Sixth Servo Amplifiers, 27 Upper-level CPU, 28 Contact Sensor, 31 Wrist Joint, 32 Elbow Joint, 33 Shoulder Joint, 40 Robot Control System, 41-46 First to Sixth Actuators, 71-76 First to Sixth Encoders

**Claims**

1. A robot control system comprising:

   an arm part or a leg part extending from a body part of a robot and including at least one joint part disposed at a position at least a first predetermined distance away from a root thereof;
   at least one drive unit configured to generate a driving force for rotationally driving the joint part; and
   at least one transmission part provided between a corresponding joint part and the drive unit and configured to transmit the driving force of the drive unit to the corresponding joint part, wherein
   the at least one drive unit is collectively provided at the root of the arm part or the leg part.

2. The robot control system according to claim 1, further comprising:

   at least one rotation detection unit configured to detect rotation information of the drive unit;
   a first control unit configured to calculate an attitude value of the robot based on the rotation information of the drive unit detected by the rotation detection unit; and
   at least one second control unit configured to provide a driving instruction to a corresponding drive unit based on the attitude value of the robot calculated by the first control unit, wherein
   the drive unit, the rotation detection unit, and the first and second control units are collectively provided at the root of the arm part or the leg part.

3. The robot control system according to claim 2, wherein

   the second control unit outputs a current value to the first control unit according to a torque exerted on the corresponding drive unit, the first control unit calculates the attitude value of the robot based on the current value received from the second control unit and the rotation information of the drive unit received from the rotation detection unit, and

the second control unit provides the driving instruction to the corresponding drive unit based on the attitude value of the robot calculated by the first control unit.

4. The robot control system according to claim 2, wherein:
the first control unit:

calculates an acceleration based on the rotational position information of the drive unit detected by the rotation detection unit, calculates the attitude value of the robot based on the rotational position information of each drive unit received from the rotation detection unit, and calculates an inertia value of the robot based on the calculated attitude value, calculates an inertia compensation value for the drive unit based on the calculated acceleration and the inertia value, outputs the calculated attitude value and the inertia compensation value to a corresponding second control unit, and

the second control unit provides the driving instruction to the corresponding drive unit based on the attitude value and the inertia compensation value received from the first control unit.

5. The robot control system according to any one of claims 2 to 4, further comprising a third control unit provided at a position at least a second predetermined distance away from the root of the arm part or the leg part, wherein the second control unit provides the driving instruction to a corresponding drive unit according to a command received from either the first or third control unit.

6. The robot control system according to claim 5, wherein the second control unit:

provides, when a collision of an object against the robot is detected, the driving instruction to the corresponding drive unit according to a command received from the first control unit, and

provides, when no collision of an object against the robot is detected, the driving instruction to the corresponding drive unit according to a command received from the third control unit.

7. A method for controlling a robot control system, the robot control system comprising:

an arm part or a leg part extending from a body part of a robot and including at least one joint part disposed at a position at least a predetermined distance away from a root thereof;

at least one drive unit configured to generate a driving force for rotationally driving the joint part;

at least one transmission part provided between a corresponding joint part and the drive unit and configured to transmit the driving force of the drive unit to the corresponding joint part;

at least one rotation detection unit configured to detect rotation information of the drive unit; a first control unit; and at least one second control unit, in which the drive unit, the rotation detection unit, the first control unit, and the at least one second control unit are collectively provided at the root of the arm part or the leg part, and

the method comprising:

a step of, by the first control unit, calculating an attitude value of the robot based on rotation information of the drive unit received from the rotation detection unit;

a step of, by the second control unit, providing a driving instruction to a corresponding drive unit based on the attitude value of the robot calculated by the first control unit.

8. A program for causing for a robot control system, the robot control system comprising:

an arm part or a leg part extending from a body part of a robot and including at least one joint part disposed at a position at least a predetermined distance away from a root thereof;

at least one drive unit configured to generate a driving force for rotationally driving the joint part;

at least one transmission part provided between a corresponding joint part and the drive unit and configured to transmit the driving force of the drive unit to the corresponding joint part;

at least one rotation detection unit configured to detect rotation information of the drive unit; a first control unit; and at least one second control unit, in which the drive unit, the rotation detection unit, the first control unit, and the at least one second control unit are collectively provided at the root of the arm part or the leg part, and

the program being configured to cause a computer to execute:

a process for, by the first control unit, calculating an attitude value of the robot based on rotation information of the drive unit received from the rotation detection unit;

a process for, by the second control unit, providing a driving instruction to a corresponding drive unit based on the attitude value of the robot calculated by the first control unit.

Fig. 1

Fig. 2

START

DETECT ROTATIONAL POSITIONS
OF FIRST TO SIXTH ACTUATORS — S101

CALCULATE ATTITUDE VALUES OF ARM PART
BASED ON ROTATIONAL POSITIONS OF
FIRST TO SIXTH ACTUATORS — S102

PROVIDE DRIVING INSTRUCTIONS TO
FIRST TO SIXTH ACTUATORS BASED ON
ATTITUDE VALUES OF ARM PART — S103

ROTATIONALLY DRIVE WRIST JOINT,
ELBOW JOINT, SHOULDER JOINT IN
RESPONSE TO DRIVING INSTRUCTIONS — S104

END

Fig. 3

Fig. 4

START

FIRST TO SIXTH SERVO AMPLIFIERS PROVIDE
DRIVING INSTRUCTIONS TO FIRST TO
SIXTH ACTUATORS IN RESPONSE TO
COMMAND RECEIVED FROM UPPER-LEVEL CPU — S201

S202

HAS COLLISION WITH
OBJECT BEEN DETECTED ?

NO

YES

FIRST TO SIXTH SERVO AMPLIFIERS PROVIDE
DRIVING INSTRUCTIONS TO FIRST TO SIXTH
ACTUATORS IN RESPONSE TO COMMAND
RECEIVED FROM LOWER-LEVEL CPU — S203

S204

HAS COLLISION
STATE BEEN COMPLETED ?

YES

NO

Fig. 5

## INTERNATIONAL SEARCH REPORT

| International application No. |
|---|
| **PCT/JP2024/020473** |

| A. | CLASSIFICATION OF SUBJECT MATTER |
|---|---|

**B25J 17/00**(2006.01)i; **B25J 9/06**(2006.01)i
FI: B25J17/00 G; B25J9/06 B

According to International Patent Classification (IPC) or to both national classification and IPC

| B. | FIELDS SEARCHED |
|---|---|

Minimum documentation searched (classification system followed by classification symbols)

B25J17/00; B25J9/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 62-16306 Y2 (MITSUBISHI HEAVY INDUSTRIES, LTD., SEIRYO ENG) 24 April 1987 (1987-04-24) | 1 |
|   | page 1, lower right column, lines 8-13 |   |
| A |   | 2-8 |
| A | JP 2004-306224 A (KEIO UNIVERSITY) 04 November 2004 (2004-11-04) | 1-8 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **26 July 2024** | **06 August 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** |  |
|  | Telephone No. |

Form PCT/ISA/210 (second sheet) (July 2022)

**INTERNATIONAL SEARCH REPORT**
Information on patent family members

International application No.

**PCT/JP2024/020473**

| Patent document cited in search report | Publication date (day/month/year) | Patent family member(s) | Publication date (day/month/year) |
|---|---|---|---|
| JP 62-16306 Y2 | 24 April 1987 | (Family: none) | |
| JP 2004-306224 A | 04 November 2004 | (Family: none) | |

Form PCT/ISA/210 (patent family annex) (July 2022)

**EP 4 751 864 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H08286759 A

- JP 2023120061 A